**Europäisches Patentamt**

**European Patent Office**

**Office européen des brevets**

(19)

(11) Veröffentlichungsnummer: **0 069 944**
**B1**

(12) **EUROPÄISCHE PATENTSCHRIFT**

(45) Veröffentlichungstag der Patentschrift:
**03.06.87**

(21) Anmeldenummer: **82105943.3**

(22) Anmeldetag: **03.07.82**

(51) Int. Cl.⁴: **B 65 D 90/04,** B 65 D 25/14,
C 08 L 67/06, B 29 C 41/08

(54) **Verfahren zur Sanierung eines Stahlbehälters.**

(30) Priorität: **15.07.81 CH 4629/81**

(43) Veröffentlichungstag der Anmeldung:
**19.01.83 Patentblatt 83/3**

(45) Bekanntmachung des Hinweises auf die Patenterteilung:
**03.06.87 Patentblatt 87/23**

(84) Benannte Vertragsstaaten:
**AT DE FR IT NL**

(56) Entgegenhaltungen:
**CH - A - 455 650**
**DE - A - 2 044 145**
**DE - A - 2 620 748**
**DE - A - 2 620 803**
**DE - A - 2 940 101**
**FR - A - 2 097 778**
**FR - A - 2 362 895**

**TECHNISCHE RUNDSCHAU, Band 63, Nr. 38, 10.**
**September 1971, Seiten 17-21 K. TANNER:**
**"Oeltanksanierung mit GFK"**
**CHEMICAL ABSTRACTS, Band 85, Nr. 18, November**
**1976, Seite 61, Nr. 125223m, Columbus, Ohio, USA D.I.**
**NETTING et al.: "Use of hollow silicate microspheres in**
**fiber reinforced plastics and syntactic foam cores"**

(73) Patentinhaber: **Bachmann, Werner,**
**Schwerzimattstrasse 35, CH-8912 Obfelden (CH)**

(72) Erfinder: **Bachmann, Werner, Schwerzimattstrasse 35,**
**CH-8912 Obfelden (CH)**

(74) Vertreter: **Riederer, Conrad A., Dr., Bahnhofstrasse 10,**
**CH-7310 Bad Ragaz (CH)**

EP 0 069 944 B1

## Beschreibung

Die Erfindung bezieht sich auf ein Verfahren zum Sanieren eines Stahlbehälters durch Aufbringen einer sandwichartig aus Kunststoffschichten und einer Distanzschicht aufgebauten Kunststoffauskleidung auf die Innenfläche des Stahlbehälters, wobei die Kunststoffauskleidung eine Festigkeit besitzt, welche derjenigen eines selbständigen Behälters entspricht.

Durch die DE-A-2 940 101 ist ein Verfahren zur Herstellung eines Innenbehälters zur Sanierung eines korrodierten Stahlbehälters bekannt geworden, bei dem auf die gereinigte Innenfläche des Stahlbehälters eine erste Schicht aus kunstharzgetränkten Glasfasermatten oder Rovinggewebe in mindestens einer Lage aufgetragen und zur Aushärtung gebracht wird, worauf dann auf dieser ersten Schicht in ein oder mehreren Lagen mit Schaumstoff vermischte Kunststoffasermatten durch Tränken mit Kunstharz verlegt und zur Aushärtung gebracht werden, um dann nach dem Aushärten eine der ersten Schicht entsprechende zweite Schicht aufzutragen und auszuhärten. Nachteilig wirken sich dabei aber der grosse Arbeitsaufwand und Materialabfall aus. Von besonderem Nachteil ist auch, dass die Sandwichschicht nicht durchgehend angebracht werden kann, sondern beispielsweise an den Stellen unterbrochen werden muss, wo noch Verstärkungsprofile notwendig sind. Die mechanischen Eigenschaften der beschriebenen Kunststoffauskleidung genügen bestenfalls für Tanks bis 2,5 m Durchmesser. Für grössere Durchmesser ist sowohl die Dicke als auch die Festigkeit der Kernschicht ungenügend.

Durch die Literaturstelle ‹Use of hollow silicate microspheres in fiber reinforced plastics and syntactic foam cores› (ICCM, Proc. Ing. Conf. Compos. Mater. 1975 (Pub. 1976) 1, 368–85), ist es bekannt geworden, mit einer neuartigen Spritzpistole gleichzeitig Kunstharz und Mikrohohlkörper sowie Glasfaserstücke zu spritzen. Nachteilig dabei ist jedoch, dass nachher ein arbeitsintensives Ausrollen erfolgen muss, um die Glasfasern völlig zu benetzen und Lufteinschlüsse zu entfernen.

Der vorliegenden Erfindung liegt die Aufgabe zugrunde, ein Verfahren der eingangs genannten Art zu finden, durch das sich die Kunststoffauskleidung schneller, kostengünstiger, mit geringerem Arbeitsaufwand und mit geringerer gesundheitlicher Belastung durch schädliche Dämpfe herstellen lässt.

Die Lösung dieser Aufgabe erfolgt dadurch, dass die Distanzschicht als Verbund zwischen den Kunststoffschichten ohne Luftzufuhr mit einer Einkomponentenspritzanlage durch Aufspritzen einer Faserpartikel enthaltenden Kunststoffspritzmasse hergestellt wird, welche folgende Zusammensetzung aufweist:

100–150 Gew. Teile ungesättigtes Polyesterharz aus 1–2 Mol Phthalsäure, 1–2 Mol Maleinsäure, 1–2 Mol Aethylenglykol oder Diäthylenglykol, 1–2 Mol Propylenglykol oder

100–150 Gew. Teile ungesättigtes Polyesterharz aus 1–2 Mol Isophthalsäure, 1–2 Mol Tetrahydrophthalsäure, 1–2 Mol Maleinsäure, 1–2 Mol Äthylenglykol oder Diäthylenglykol, 1–2 Mol Propylenglykol gelöst in

40– 75 Gew. Teilen Styrol und

1– 15 Gew. Teilen Diallylphthalat

1– 10 Gew. Teilen Methylmethacrylat

1– 25 Gew. Teilen Vinyltoluol, zur Aushärtung erforderliche Beschleuniger und Inhibitoren,

15– 30 Gew. Teile Kurzglasfasern einer Länge von max. 0,8 mm

bis 10 Gew. Teile Glasfasern einer Länge von max. 3 mm,

bis 5 Gew. Teile Glasfasern einer Länge von max. 10 mm,

bis 10 Gew. Teile Kunststoffasern einer Länge von max. 3 mm,

bis 5 Gew. Teile Kunststoffasern einer Länge von max. 10 mm und

5– 25 Gew. Teile anorganische Mikrohohlkörper eines Durchmessers von 0,05–0,5 mm sowie Pigmente, Thixotropier-, Entlüftungs- und weitere Hilfsmittel.

Das für die Herstellung der Distanzschicht der Sandwichauskleidung aufgespritzte Material hat eine Härtungszeit, die ideal auf die zum Herstellen dieser Schicht erforderliche Arbeitszeit abgestimmt ist. Die Verarbeitungszeit beträgt bie 20 °C Materialtemperatur und einer Menge von 15 kg 25 bis 35 Minuten und bei tieferen Temperaturen von bis zu 12 °C 40 bis 50 Minuten. Die Anhärtungszeit ist von der Temperatur und der Schichtdicke abhängig und entspricht der Zeit bis zum Erreichen der Maximaltemperatur der exothermen Reaktion und Abkühlen auf Umgebungstemperatur. Bei 20 °C und 5 mm Schichtdicke beträgt die Anhärtungszeit 90 Minuten. Bei 12 °C hingegen beträgt sie ca. 5 Stunden. Nach der Anhärtungszeit wird das Material vorzugsweise während 12 Stunden bei 40 °C nachgehärtet.

Die maximale Temperatur der exothermen Reaktion der Härtung beträgt bei einer Verarbeitungstemperatur von 12° bis 20 °C und einer Schichtdicke von 5 mm 45 °C.

Vorteilhaft hinsichtlich des apparativen Aufwandes bei der Verarbeitung des Materials für die Herstellung der Distanzschicht wirkt sich aus, dass nur eine Einkomponentenanlage erforderlich ist. Das Aufbringen des Materials erfolgt ohne Luft unter verhältnismässig hohem Druck.

Für die Härtung des Materials werden je nach der Vorbeschleunigung vorzugsweise Ketonperoxide mit einem Anteil von 1,2 bis 2,5% verwendet.

## Patentansprüche

1. Verfahren zum Sanieren eines Stahlbehälters durch Aufbringen einer sandwichartig aus Kunststoffschichten und einer Distanzschicht aufgebauten Kunststoffauskleidung auf die Innenflächen des Stahlbehälters, wobei die Kunststoffauskleidung eine Festigkeit besitzt, welche derjenigen eines selbständigen Behälters entspricht, dadurch gekennzeichnet, dass die Distanzschicht als Verbund zwischen den Kunststoffschichten ohne Luftzufuhr mit einer Einkomponentenspritzanlage durch Aufspritzen einer Faserpartikel enthaltenden Kunststoffspritzmasse hergestellt wird, welche folgende Zusammensetzung aufweist:

100–150 Gew. Teile ungesättigtes Polyesterharz aus 1–2 Mol Phthalsäure, 1–2 Mol Maleinsäure, 1–2 Mol Äthylenglykol oder Diäthylenglykol, 1–2 Mol Propylenglykol oder

100–150 Gew. Teile ungesättigtes Polyesterharz aus 1–2 Mol Isophthalsäure, 1–2 Mol Tetrahydrophthalsäure, 1–2 Mol Maleinsäure, 1–2 Mol Äthylenglykol oder Diäthylenglykol, 1–2 Mol Propylenglykol gelöst in

40– 75 Gew. Teilen Styrol und

1– 15 Gew. Teilen Diallylphthalat

1– 10 Gew. Teilen Methylmethacrylat

1– 25 Gew. Teilen Vinyltoluol, zur Aushärtung erforderliche Beschleuniger und Inhibitoren,

15– 30 Gew. Teile Kurzglasfasern einer Länge von max. 0,8 mm,

bis 10 Gew. Teile Glasfasern einer Länge von max. 3 mm,

bis 5 Gew. Teile Glasfasern einer Länge von max. 10 mm,

bis 10 Gew. Teile Kunststoffasern einer Länge von max. 3 mm,

bis 5 Gew. Teile Kunststoffasern einer Länge von max. 10 mm und

5– 25 Gew. Teile anorganische Mikrohohlkörper eines Durchmessers von 0,05–0,5 mm sowie Pigmente, Thixotropier-, Entlüftungs- und weitere Hilfsmittel.

2. Verfahren nach Anspruch 1, dadurch gekennzeichnet, dass die Kunststoffschichten und die Distanzschicht aus glasfaserverstärktem Polyesterharz hergestellt werden.

3. Verfahren nach Anspruch 1 oder 2, dadurch gekennzeichnet, dass das Aufspritzen bei einer Temperatur von 12 bis 20 °C, vorzugsweise bei 20 °C erfolgt.

## Claims

1. Method of restoration of a steel tank by application of synthetic resin cover on the interior surface of the steel tank, said synthetic resin cover comprising in form of a sandwich synthetic resin layers and a spacing layer and having a strength corresponding to the strength of an independent tank, characterized in that the spacing layer is made as an interconnection between the synthetic resin layers by spraying, without supplying air, by means of a spray device for one component only a spraying resin having the following composition:

100–150 units of weight unsaturated polyester resin from 1–2 mol phthalic acid, 1–2 mol maleic acid, 1–2 mol ethyleneglycol or diethyleneglycol, 1–2 mol propyleneglycol or

100–150 units of weight unsaturated polyester resin from 1–2 mol isophthalic acid, 1–2 mol tetrahydrophthalic acid, 1–2 mol maleic acid, 1–2 mol ethyleneglycol or diethyleneglycol, 1–2 mol propyleneglycol solved in

40– 75 units of weight styrene and

1– 15 units of weight diallylphthalat

1– 10 units of weight methylmethacrylate

1– 25 units of weight vinyltoluene accelerators and inhibitors necessary for hardening

15– 30 units of weight short glass fibres of maximum 0,8 mm length

up to 10 units of weight glass fibres of maximum 3 mm length,

up to 5 units of weight glass fibres of maximum 10 mm length,

up to 10 units of weight synthetic fibres of maximum 3 mm length,

up to 5 units of weight synthetic fibres of maximum 10 mm length,

5– 25 units of weight inorganic micro-capsules of 0,05 to 0,5 mm, pigments, thixotropic agents, de-aerating and other agents.

2. Method according to claim 1, characterized in that the synthetic resin layers and the spacing layers are made from glass fibre reinforced polyester resin.

3. Method according to claim 1 or 2, characterized in that the spraying takes place at a temperature of 12 to 20 °C, preferably at 20 °C.

## Revendications

1. Procédé de rénovation d'un récipient en acier par application, sur la surface intérieure du récipient en acier d'un revêtement de matière plastique se composant en sandwich de couches de matière plastique et d'une couche intercalaire, le revêtement de matière plastique possédant une résistance qui correspond à celle d'un récipient indépendant, caractérisé en ce que la couche intercalaire est réalisée en tant que liaison entre les couches de matière plastique sans apport d'air, avec une installation de pulvérisation pour un seul composant, par pulvérisation d'une masse à pulvériser de matière plastique contenant des particules de fibres, qui présente la composition suivante:

100–150 parties en poids de résine de polyester insaturé, formée de 1–2 mol d'acide phtalique, 1–2 mol d'acide maléique, 1–2 mol d'éthylèneglycol ou de diéthylèneglycol, 1–2 mol de propylèneglycol ou

100–150 parties en poids de résine de polyester insaturé, formée de 1–2 mol d'acide isophtalique, 1–2 mol d'acide tétrahydrophtalique, 1–2 mol d'acide maléique, 1–2 mol d'éthylèneglycol ou de diéthylèneglycol, 1–2 mol de propylèneglycol,

dissoutes dans

40–75 parties en poids de styrène et

1–15 parties en poids de phtalate de diallyle,

1–10 parties en poids de méthacrylate de méthyle,

1–25 parties en poids de vinyltoluène les accélérateurs et inhibiteurs nécessaires pour le durcissement complet,

10–30 parties en poids de courtes fibres de verre d'une longueur de 0,8 mm au maximum,

jusqu'à 10 parties en poids de fibres de verre d'une longueur de 3 mm au maximum,

jusqu'à 5 parties en poids de fibres de verre d'une longueur de 10 mm au maximum,

jusqu'à 10 parties en poids de fibres de matière plastique d'une longueur de 3 mm au maximum,

jusqu'à 5 parties en poids de fibres de matière plastique d'une longueur de 10 mm au maximum et

5–25 parties en poids de microcorps creux inorganiques ayant un diamètre de 0,05 à 0,5 mm, ainsi que pigments, agents de thixotropie, de désaérage et autres agents auxiliaires.

2. Procédé selon la revendication 1, caractérisé en ce que les couches de matière plastique et la couche intercalaire sont fabriquées à partir de résine de polyester renforcée de fibres de verre.

3. Procédé selon la revendication 1 ou 2, caractérisé en ce que la pulvérisation est effectuée à une température de 12 à 20°C, de préférence de l'ordre de 20°C.